# EUROPEAN PATENT APPLICATION

(11) **EP 4 842 131 A1**
(43) Date of publication of application: **18.11.2026**
(21) Application number: 24916433.6
(22) Date of filing: 13.09.2024
(51) Int. Cl.: H04W 74/0833

(54) **TRANSMISSION RESOURCE CONFIGURATION METHOD, COMMUNICATION DEVICE, AND STORAGE MEDIUM**

(30) Priority: 12.01.2024 CN 202410051868
(71) Applicant: ZTE Corporation, Shenzhen, Guangdong 518057 (CN)
(72) Inventor: BIAN, Luanjian, Shenzhen, Guangdong 518057 (CN); DAI, Bo, Shenzhen, Guangdong 518057 (CN); HU, Youjun, Shenzhen, Guangdong 518057 (CN); YANG, Weiwei, Shenzhen, Guangdong 518057 (CN); LIU, Kun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/118805
(87) International publication number: WO 2025/148381

(57) **Abstract**

The present application provides a transmission resource configuration method, a communication device, and a storage medium. The transmission resource configuration method comprises: for a transmission resource set, configuring a preamble sequence set, the preamble sequence set being used in the transmission resource set; and sending configuration information of the transmission resource set and configuration information of the preamble sequence set to a second node.

## Description

The present disclosure claims priority to Chinese Patent Application No. 202410051868.8, filed on January 12, 2024, the entire contents of which are incorporated herein by reference.

### TECHNICAL FIELD

The present disclosure relates to the technical field of communications, and in particular, to a transmission resource configuration method, a communication apparatus, and a storage medium.

### BACKGROUND

In the 5th-Generation mobile communication technology (5G) New Radio (NR) technology, a terminal device may access a wireless network through a random access procedure. In the random access procedure, the terminal randomly selects a preamble sequence from a predefined preamble sequence set and sends the preamble sequence. In a case where a plurality of terminals need to access the network, different terminals may select different preamble sequences, and send a physical random access channel (PRACH) signal including the preamble sequence, thereby avoiding access contention between the terminals.

### SUMMARY

In an aspect, a transmission resource configuration method is provided, which is applied to a first node. The transmission resource configuration method includes: configuring a preamble sequence set for a transmission resource set, where the preamble sequence set is used within the transmission resource set; and sending configuration information of the transmission resource set and configuration information of the preamble sequence set to a second node.

In another aspect, a transmission resource configuration method is provided, which is applied to a second node. The transmission resource configuration method includes: receiving configuration information of a transmission resource set and configuration information of a preamble sequence set sent from a first node; determining the transmission resource set according to the configuration information of the transmission resource set; determining the preamble sequence set according to the configuration information of the preamble sequence set; and sending a preamble sequence in the preamble sequence set within the transmission resource set.

In yet another aspect, a configuration apparatus is provided, which is applied to a first node. The configuration apparatus includes: a configuration module, configured to configure a preamble sequence set for a transmission resource set, where the preamble sequence set is used within the transmission resource set; and a communication module, configured to send configuration information of the transmission resource set and configuration information of the preamble sequence set to a second node.

In yet another aspect, a configuration apparatus is provided, which is applied to a second node. The configuration apparatus includes: a communication module, configured to receive configuration information of a transmission resource set and configuration information of a preamble sequence set sent from a first node; and a determination module, configured to: determine the transmission resource set according to the configuration information of the transmission resource set; and determine the preamble sequence set according to the configuration information of the preamble sequence set. The communication module is further configured to send a preamble sequence in the preamble sequence set within the transmission resource set.

In yet another aspect, a communication apparatus is provided, and the communication apparatus includes: a memory and a processor. The memory is coupled to the processor, the memory is configured to store computer programs, and the processor, upon executing the computer programs, implementing the above-mentioned transmission resource configuration methods.

In yet another aspect, a computer-readable storage medium is provided, where a computer program instruction is stored on the computer-readable storage medium, in a case where the computer program instruction is performed by the processor, the above-mentioned transmission resource configuration methods are implemented.

In yet another aspect, a computer program product is provided, the computer program product includes computer program instructions, the computer program instructions, upon being executed by a processor, enabling the implementation of the above-mentioned transmission resource configuration methods.

### BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of a network architecture of a mobile communication network according to some embodiments of the present disclosure.
FIG. 2 is a flowchart of a transmission resource configuration method according to some embodiments of the present disclosure.
FIG. 3 is a flowchart of another transmission resource configuration method according to some embodiments of the present disclosure.
FIG. 4 is a structural schematic diagram of a configuration apparatus according to some embodiments of the present disclosure.
FIG. 5 is a structural schematic diagram of another configuration apparatus according to some embodiments of the present disclosure.
FIG. 6 is a structural schematic diagram of a communication apparatus according to some embodiments of the present disclosure.

### DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that, in the present disclosure, the words "exemplary/exemplarily" or "for example" are used to present an example, an illustration, or a description. Any embodiment or design scheme described with the words "exemplary/exemplarily" or "for example" in the present disclosure should not be construed as being more preferred or advantageous than other embodiments or design solutions. Specifically, the usage of the wordings such as "exemplary/exemplarily" or "for example" is intended to present related concepts in a concrete way.

Hereinafter, terms such as "first" and "second" are used for descriptive purposes only, but are not to be understood as indicating or implying the relative importance or implicitly indicating the number of indicated technical features. Thus, features limited with wordings like "first" or "second," etc., may explicitly or implicitly include one or more of the feature(s).

In the description of the present disclosure, unless otherwise specified, "/" means an "or" relationship, for example, "A/B" may represent A or B. "And/or" in the present disclosure is just an association relationship that describes relevant objects, indicating that three relationships can exist. For example, A and/or B may mean these three situations: A exists alone; A and B exist simultaneously; or B exist alone. In addition, "at least one" means a number of one or more, and "plurality" means a number of two or more.

In a case where a plurality of terminals need to access the network, different terminals may select different preamble sequences, and send a physical random access channel (PRACH) signal including the preamble sequence, thereby avoiding access contention between the terminals. However, for a type of terminal, the predefined preamble sequence set is often a fixed set. Therefore, in a case where the number of access terminals is small, preamble sequence resources may be wasted; in a case where the number of access terminals is large, preamble sequence resources may be insufficient, thereby increasing a probability of contention.

Therefore, it can be seen that a preamble sequence allocation manner in the related art is not flexible enough, reducing the random access efficiency of the system.

In view of the above technical problem, a transmission resource configuration method is provided in the embodiments of the present disclosure, the idea of which lies in: a first node configures a preamble sequence set for a transmission resource set, where the preamble sequence set is used within the transmission resource set; and then the first node sends configuration information of the transmission resource set and configuration information of the preamble sequence set to a second node. It can be seen that in the method provided in the embodiments of the present disclosure, preamble sequences may be dynamically allocated for different transmission resources, so that the preamble sequence set may be flexibly adjusted, avoiding waste of preamble sequence resources and avoiding access contention between terminals, and thus the random access efficiency of the system may be improved.

The technical solutions provided in the embodiments of the present disclosure may be applied to various mobile communication networks, for example, an NR mobile communication network adopting 5G, a future mobile communication network, or a converged system of multiple communications, which is not limited in the embodiments of the present disclosure.

A network architecture of the mobile communication network (including but not limited to 3G, 4G, 5G, and future mobile communication networks) in the embodiments of the present disclosure may include at least a first communication node and a second communication node. It should be understood that in this example, the first communication node in a downlink may be a network side device (e.g., including but not limited to a base station), and the second communication node may be a terminal side device (e.g., including but not limited to a terminal). Of course, in an uplink, the first communication node may also be a terminal side device, and the second communication node may also be a network side device. In a case where two communication nodes are in a device-to-device communication, both the first communication node and the second communication node may be base stations or terminals. For ease of description, the first communication node may be described as a first node, and the second communication node may be described as a second node.

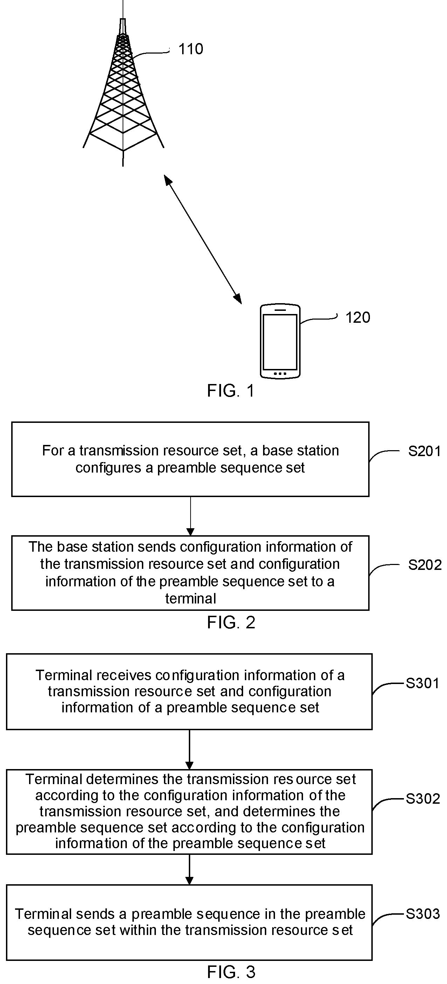

Exemplarily, taking the first node being a base station and the second node being a terminal as an example, FIG. 1 shows a schematic diagram of a network architecture of a mobile communication network according to the embodiments of the present disclosure. As shown in FIG. 1, the mobile communication network includes a base station 110 and a terminal 120.

In some embodiments, the base station 110 is configured to provide wireless access services for a plurality of terminals 120. For example, a base station provides a service coverage area (also referred to as a cell). Terminals 120 entering the area may communicate with the base station 110 via wireless signals to receive wireless access services provided by the base station 110.

In some embodiments, the base station 110 may be a base station or an evolutional base station (e.g., an evolutional node B (eNB or eNodeB)) in long term evolution (LTE), long term evolution advanced (LTEA), a base station in a 5G network, or a base station in a future communication system, etc. The base station may include various network side devices such as a macro base station, a micro base station, a home base station, a remote radio device, a reconfigurable intelligent surface (RIS), a router, a wireless fidelity (Wi-Fi) device, or the like.

In some embodiments, the terminal 120 may be a device with wireless transceiver functions, which may be deployed on land, including indoors or outdoors, handheld, wearable or vehicle-mounted; may further be deployed on the water surface (such as on ships, etc.); may further be deployed in the air (for example, on airplanes, balloons and satellites, etc.). The terminal may be a mobile phone, a pad, a computer with wireless transceiver functions, a virtual reality (VR) terminal, an augmented reality (AR) terminal, a wireless terminal in the industrial control, a wireless terminal in self driving, a wireless terminal in a remote medical, a wireless terminal in a smart grid, a wireless terminal in transportation safety, a wireless terminal in smart city, a wireless terminal in smart home, etc. The application scenarios are not limited in the embodiments of the present disclosure. The terminal, sometimes, may also be referred to as a user, a UE (user equipment), an access terminal, a UE unit, a UE station, a mobile radio station, a mobile station, a remote station, a remote terminal, a mobile device, a UE terminal, a wireless communication device, a UE agent, a UE apparatus, etc., which is not limited in the embodiments of the present disclosure.

It should be noted that FIG. 1 is merely an exemplary framework diagram, and a number of devices and names of the various devices included in FIG. 1 are not limited. In addition to devices shown in FIG. 1, the communication system may further include other devices, such as a core network device.

Application scenarios of the embodiments of the present disclosure are not limited. In addition, an architecture and a service scenario described in the embodiments of the present disclosure are used for illustrating the technical solutions of the embodiments of the present disclosure more clearly, and do not constitute a limitation on the technical solutions provided in the embodiments of the present disclosure. Those of ordinary skill in the art should know that with the evolution of the network architecture and the emergence of new service scenarios, the technical solutions provided in the present disclosure are also applicable to similar technical problems.

The transmission resource configuration method provided in the embodiments of the present disclosure is introduced below.

A transmission resource configuration method is provided in the present disclosure, which is applied to the mobile communication network as shown in FIG. 1 (for ease of description, description is made below by taking the first node being a base station and the second node being a terminal as an example). As shown in FIG. 2, the transmission resource configuration method includes the following S201 and S202.

In S201, the base station configures a preamble sequence set for a transmission resource set.

The preamble sequence set is used within the transmission resource set.

Exemplarily, the transmission resource set includes M transmission resources, where M is greater than or equal to 1 and is an integer; the preamble sequence set includes P preamble sequences, where P is greater than or equal to 1 and is an integer.

In some embodiments, a transmission resource includes at least one of: a time domain resource, a frequency domain resource, a synchronization signal and physical broadcast channel block (SSB) resource, and a beam resource.

The time domain resource may include at least one of the following time domain resources: a slot, a subframe, a system frame, or an orthogonal frequency division multiplexing (OFDM) symbol, or the like. A time domain resource set includes M time domain resources, where M is greater than or equal to 1 and is an integer.

The frequency domain resource may include at least one of the following frequency domain resources: a bandwidth part (BWP), a transmission frequency band, a physical resource block, a subcarrier, a subchannel, or a carrier (including an anchor carrier and a non-anchor carrier), or the like.

An SSB resource is an SSB resource sent from the base station, and an SSB resource set includes Q SSB resources, where Q is greater than or equal to 1 and is an integer.

A beam resource may include at least one of: a digital beam, an analog beam, or a precoding matrix, or the like. A beam resource set includes Q beam resources, where Q is greater than or equal to 1 and is an integer.

It may be understood that the configuration information of the transmission resource set may have different forms, and exemplarily, the configuration information of the transmission resource set may have the following five implementations.

In implementation one, the configuration information of the transmission resource set includes at least one of: an index of a starting transmission resource, an offset value of the starting transmission resource, a transmission resource interval, and a number of transmission resources.

The starting transmission resource is a first transmission resource in the transmission resource set. It may be understood that the configuration information of the transmission resource set may include the index of the starting transmission resource, or the offset value of the starting transmission resource. In this way, the terminal may determine the starting transmission resource based on the index of the starting transmission resource, or determine the starting transmission resource according to the offset value of the starting transmission resource.

The transmission resource interval is an interval between every two adjacent transmission resources in the transmission resource set.

The number of transmission resources is a number of transmission resources included in the transmission resource set.

Exemplarily, the configuration information of the transmission resource set may include at least one of: the index of the starting transmission resource, the transmission resource interval, and the number of transmission resources, and then the transmission resource set includes a transmission resource m•T+s, where values of m are 0, 1, 2, ..., M-1. For example, the transmission resource set includes transmission resources s, T+s, 2T+s, 3T+s, ..., (M-1)•T+s; s is the index of the starting transmission resource, T is the transmission resource interval, M is the number of transmission resources, M is greater than or equal to 1 and is an integer, and s is an integer.

Exemplarily, it is assumed that transmission resources include time domain resources, configuration information of a time domain resource set includes: a starting time domain resource s, a time domain resource interval T, and a number M of time domain resources, and then the time domain resource set includes time domain resources s, T+s, 2T+s, 3T+s, ..., (M-1)•T+s; s is the index of the starting time domain resource, T is the time domain resource interval, M is the number of time domain resources, and M is greater than or equal to 1. It can be seen that a value of the above M is indicated by the configuration information of the time domain resource set, or the configuration information of the time domain resource set does not include the number M of time domain resources, the value of M is a predefined value and being an integer, and s is an integer.

Exemplarily, the configuration information of the transmission resource set may include at least one of: an offset value f of the starting transmission resource, the transmission resource interval T, and the number M of transmission resources. For example, it is assumed that the transmission resources are time domain resources, the configuration information of the transmission resource set is transmitted on a time domain resource n, and the starting time domain resource of the time domain resource set corresponding to the time domain resource offset value f is a time domain resource n+f (n, n+f are indexes of time domain resources); the time domain resource set includes time domain resources n+f, T+n+f, 2T+n+f, 3T+n+f, ..., (M-1)•T+n+f, M is greater than or equal to 1 and is an integer, and n and f both are integers.

Exemplarily, the transmission resources include frequency domain resources, and configuration information of a frequency domain resource set includes at least one of: an index j of a starting frequency domain resource and a number N of frequency domain resources. Further, the frequency domain resource set determined according to the configuration information of the frequency domain resource set includes frequency domain resources j to j+N-1. For example, in a case where j is 0, the frequency domain resource set includes frequency domain resources 0 to N-1. It can be seen that a value of the above N is indicated by the configuration information of the frequency domain resource set, or the configuration information of the frequency domain resource set does not include the number N of frequency domain resources, N is a predefined value, greater than or equal to 1 and is an integer, and j is an integer.

Exemplarily, the transmission resources include frequency domain resources, the configuration information of the frequency domain resource set includes at least one of: an index j of a starting frequency domain resource, a frequency domain resource interval K, and the number N of frequency domain resources, and then the frequency domain resource set determined according to the configuration information of the frequency domain resource set includes frequency domain resources j, K+j, 2K+j, 3K+j, ..., (N-1)•K+j. It can be seen that a value of the above N is indicated by the configuration information of the frequency domain resource set, or the configuration information of the frequency domain resource set does not include the number N of frequency domain resources, the value of N is a predefined value, greater than or equal to 1 and is an integer, K is greater than or equal to 1 and is an integer, and j is an integer.

Exemplarily, the transmission resources include frequency domain resources, and the configuration information of the frequency domain resource set includes at least one of: the index j of the starting frequency domain resource, the frequency domain resource interval K, and the number N of frequency domain resources, where N and K are greater than or equal to 1 and are integers. The index j of the starting frequency domain resource corresponds to a starting frequency domain position index of a first frequency domain resource in the frequency domain resource set, where j is an integer. The starting frequency domain position index may be a starting subcarrier index, a starting physical resource block index, or a starting subband index, etc. It is assumed that a starting frequency domain position in the configuration information of the frequency domain resource set is a physical resource block j, starting positions of all frequency domain resources included in the frequency domain resource set determined according to the configuration information of the frequency domain resource set are respectively j, K+j, 2K+j, 3K+j, ..., (N-1)•K+j. A value of the above N is indicated by the configuration information of the frequency domain resource set, or the configuration information of the frequency domain resource set does not include the number N of frequency domain resources, the N value is a predefined value.

Exemplarily, in a case where the transmission resources include SSB resources, configuration information of a SSB resource set includes at least one of: an index i of a starting SSB and a number Q of SSBs. The index i of the starting SSB is an index of a first SSB in the SSB resource set; the number Q of SSBs is a number of SSBs included in the SSB resource set. The SSB resource set determined according to the configuration information of the SSB resource set includes SSBs i to i+Q-1; for example, in a case where i is 0, the SSB resource set includes SSB resources 0 to Q-1, where i is an integer. A value of Q is indicated by the configuration information of the SSB resource set, or the configuration information of the SSB resource set does not include the number Q of SSBs, Q is a predefined value, greater than or equal to 1 and is an integer.

Exemplarily, in a case where the transmission resources include beam resources, configuration information of a beam resource set includes at least one of: an index i of a starting beam and a number Q of beams. The starting beam corresponds to a first beam in the beam resource set; the number of beams corresponds to a number of beams included in the beam resource set. The beam resource set determined according to the configuration information of the beam resource set includes beam resources i to i+Q-1, where i is an integer. A value of Q is indicated by the configuration information of the beam resource set, or the configuration information of the beam resource set does not include the number Q of beams, Q is a predefined value, greater than or equal to 1 and is an integer.

In implementation two, the configuration information of the transmission resource set includes a configuration information index. The configuration information index corresponds to at least one of an index of a starting transmission resource, a transmission resource interval, a number of transmission resources, or an index of a transmission resource.

Exemplarily, the above configuration information index may be in the form shown in the following Table 1 or Table 2, where values in the tables are example values.

**Table 1**

| Configuration | Starting | Transmission | Number of |
|---|---|---|---|
| information index | transmission resource | resource interval | transmission resources |
| 0 | 2 | 4 | 8 |
| 1 | 6 | - | 5 |
| 2 | 8 | 4 | 5 |
| 3 | 7 | - | 6 |

**Table 2**

| Configuration information index | Index of transmission resource |
|---|---|
| 0 | 0, 1, 2, 3 |
| 1 | 0, 2, 3 |
| 2 | 0, 2 |
| 3 | 1, 2, 3 |

In implementation three, the configuration information of the transmission resource set includes: at least one index of at least one transmission resource, where transmission resources corresponding to indexes of transmission resources constitute the transmission resource set.

Exemplarily, it is assumed that the configuration information of the frequency domain resource set includes N indexes of frequency domain resources, the frequency domain resource set includes N frequency domain resources corresponding to the N indexes of frequency domain resources, where N is greater than or equal to 1 and is an integer.

In implementation four, the configuration information of the transmission resource set includes at least one of: an index of a transmission resource, a first numerical value, a second numerical value, and a number of transmission resources.

In some embodiments, the transmission resource set includes: a transmission resource i; or the transmission resource set includes: transmission resources i to i+C-1; i satisfies mod (i, A)=B; i is an index of a transmission resource, A is the first numerical value, B is the second numerical value, C is the number of transmission resources, A and B are both greater than or equal to 1 and are integers, i is an integer, and C is greater than or equal to 1 and is an integer.

Exemplarily, the transmission resources include time domain resources (for example, subframes or slots), and the time domain resource set includes a time domain resource i, where i satisfies mod (i, A)=B. It is assumed that the first numerical value A is equal to 10 and the second numerical value B is equal to 2, the time domain resource set includes a time domain resource i satisfying mod (i, 10)=2, for example, the time domain resource set includes time domain resources 2, 12, 22, 32, 42, or the like.

Exemplarily, the transmission resources include time domain resources (for example, subframes or slots), the time domain resource set includes a time domain resource i, the time domain resource set includes time domain resources i to i+C-1, where i satisfies mod (i, A)=B. It is assumed that the first numerical value A is equal to 10, the second numerical value B is equal to 2, and the number C of time domain resources is equal to 3, the time domain resource set includes time domain resources i to i+3-1 satisfying mod (i, 10)=2, thus, the time domain resource set includes time domain resources 2, 3, 4, 12, 13, 14, 22, 23, 24, 32, 33, 34, 42, 43, 44, and so on.

Exemplarily, the transmission resources include frequency domain resources, the frequency domain resource set includes a frequency domain resource i; or the frequency domain resource set includes a frequency domain resource i+C-1; where i satisfies mod (i, A)=B.

Exemplarily, the transmission resources include SSB resources, the SSB resource set includes a SSB resource corresponding to an index i of SSB; or the SSB resource set includes SSB resources corresponding to indexes i to i+C-1 of SSBs; where i satisfies mod (i, A)=B.

In implementation five, the configuration information of the transmission resource set includes a bitmap for indicating transmission resources.

A value of each indication bit in the bitmap is used to indicate whether a transmission resource corresponding to the indication bit is a transmission resource included in the transmission resource set.

Exemplarily, the transmission resources include frequency domain resources, and the configuration information of the frequency domain resource set includes a bitmap (i.e., a binary bit sequence) for indicating the frequency domain resources. In the bitmap, each indication bit (bit) corresponds to a frequency domain resource (i.e., corresponds to an index of a frequency domain resource). A value of an indication bit is used to indicate whether a frequency domain resource corresponding to the indication bit is a frequency domain resource in the frequency domain resource set.

In some embodiments, a length of the bitmap (a number of indication bits included in the bitmap) is determined according to a total number of transmission resources.

Exemplarily, the transmission resources include frequency domain resources, and it is assumed that there are 8 frequency domain resources in total, the length of the bitmap is 8, i.e., 8 indication bits, which are used to indicate the 8 frequency domain resources respectively. It is assumed that the value of the bitmap is 00000011, it indicates that the frequency domain resource set includes a first frequency domain resource and a second frequency domain resource among the 8 frequency domain resources; it is assumed that the value of the bitmap is 00110010, it indicates that the frequency domain resource set includes a second frequency domain resource, a fifth frequency domain resource and a sixth frequency domain resource among the 8 frequency domain resources.

Exemplarily, the transmission resources include SSB resources, and the configuration information of a SSB resource set includes a bitmap for indicating SSB resources. In the bitmap, each indication bit corresponds to an SSB resource. A value of an indication bit is used to indicate whether an SSB corresponding to the indication bit is an SSB resource included in the SSB resource set, for example, an indication bit with a value of 1 indicates that an SSB corresponding to the indication bit is an SSB in the SSB resource set.

It may be understood that the configuration information of the preamble sequence set may have different forms. Exemplarily, the configuration information of the preamble sequence set may have the following four implementations.

In implementation one, the configuration information of the preamble sequence set includes an index of the preamble sequence set, and the index of the preamble sequence set corresponds to the preamble sequence set.

Exemplarily, it is assumed that there are three preamble sequence sets in total, with indexes respectively being 0, 1, and 2. The preamble sequence set with the index 0 includes P1 preamble sequences, the preamble sequence set with the index 1 includes P2 preamble sequences, and the preamble sequence set with the index 2 includes P3 preamble sequences, where P1, P2, and P3 are all greater than or equal to 1 and are integers. Numbers of preamble sequences included in different preamble sequence sets may be the same or different.

In implementation two, the configuration information of the preamble sequence set includes at least one of: an index of a starting preamble sequence, a preamble sequence interval, and a number of preamble sequences.

Exemplarily, the preamble sequence set includes a preamble sequence p•H+h, where values of p are 0, 1, 2, ..., P-1; for example, the preamble sequence set includes preamble sequences h, H+h, 2H+h, 3H+h, ..., (P-1)•H+h. h is the index of the starting preamble sequence and is an integer, H is the preamble sequence interval, and P is the number of preamble sequences, greater than or equal to 1 and is an integer.

In implementation three, the configuration information of the preamble sequence set includes at least one of: an index of a preamble sequence, a third numerical value, a fourth numerical value, and a number of preamble sequences.

In some embodiments, the preamble sequence set includes a preamble sequence h; or the preamble sequence set includes preamble sequences h to h+F-1; where h satisfies mod (h, D)=E; where h is the index of the preamble sequence, D is the third numerical value, E is the fourth numerical value, F is the number of preamble sequences, D and E are both greater than or equal to 1 and are integers, F is greater than or equal to 1 and is an integer, and h is an integer.

Exemplarily, it is assumed that the third numerical value D is equal to 4 and the fourth numerical value E is equal to 0, the preamble sequence set includes a preamble sequence h satisfying mod (h, 4)=0, i.e., the preamble sequence set includes preamble sequences 0, 4, 8, 12, ..., P0, where P0 is less than or equal to a total number of preamble sequences and is an integer.

Exemplarily, it is assumed that the third numerical value D is equal to 4, the fourth numerical value E is equal to 1, and the number F of preamble sequences is equal to 2, the preamble sequence set includes preamble sequences h to h+2-1 satisfying mod (h, 4)=1, i.e., the preamble sequence set includes preamble sequences 1, 2, 5, 6, 9, 10, 13, 14, ..., P0, P0+1, where P0 is less than or equal to the total number of preamble sequences and is an integer.

In implementation four, the configuration information of the preamble sequence set includes a bitmap for indicating preamble sequences.

A value of each indication bit in the bitmap is used to indicate whether a preamble sequence corresponding to the indication bit is a preamble sequence included in the preamble sequence set.

Exemplarily, the configuration information of the preamble sequence set includes a bitmap (i.e., a binary bit sequence) for indicating the preamble sequences. In the bitmap, each indication bit (bit) corresponds to a preamble sequence, and a value of an indication bit is used to indicate whether a preamble sequence corresponding to the indication bit is a preamble sequence in the preamble sequence set. For example, a bitmap with a length of 16 is used to indicate 16 preamble sequences, and it is assumed that a value of the bitmap is 0000 0000 0000 0011, it indicates that the preamble sequence set includes a first preamble sequence and a second preamble sequence among the 16 preamble sequences; it is assumed that the value of the bitmap is 1000 0000 0011 0010, it indicates that the preamble sequence set includes a first preamble sequence, a fifth preamble sequence, a sixth preamble sequence and a sixteenth preamble sequence among the 16 preamble sequences.

In S202, the base station sends the configuration information of the transmission resource set and the configuration information of the preamble sequence set to the terminal.

It may be understood that, after the terminal receives the configuration information of the transmission resource set and the configuration information of the preamble sequence set sent from the base station, the terminal may determine the preamble sequence set and the transmission resource set according to the configuration information, and send a preamble sequence in the preamble sequence set on a transmission resource within a range of the transmission resource set. Thus, the base station may realize configuring a preamble sequence set for the terminal for a transmission resource set.

As a possible implementation, the above S202 may be implemented as that: the base station sends a first higher-layer configuration parameter, where the first higher-layer configuration parameter is used to indicate the configuration information of the transmission resource set; and the base station sends downlink control information, where a first indication field in the downlink control information is used to indicate the configuration information of the preamble sequence set. The above first higher-layer configuration parameter includes L higher-layer configuration parameters, and the above first indication field includes R indication fields, where L and R are both greater than or equal to 1 and are integers.

Correspondingly, the terminal obtains the configuration information of the transmission resource set by receiving the first higher-layer configuration parameter sent from the base station, and obtains the configuration information of the preamble sequence set by receiving the downlink control information.

As another implementation, the above S202 may be implemented as that: the base station sends a first higher-layer configuration parameter, where the first higher-layer configuration parameter is used to indicate the configuration information of the preamble sequence set; and the base station sends downlink control information, where a first indication field in the downlink control information is used to indicate the configuration information of the transmission resource set. The above first higher-layer configuration parameter includes L higher-layer configuration parameters, and the above first indication field includes R indication fields, where L and R are both greater than or equal to 1 and are integers.

Correspondingly, the terminal obtains the configuration information of the preamble sequence set by receiving the first higher-layer configuration parameter sent from the base station, and obtains the configuration information of the transmission resource set by receiving the downlink control information.

As another implementation, the above S202 may be implemented as that: the base station sends a first higher-layer configuration parameter, where the first higher-layer configuration parameter is used to indicate the configuration information of the preamble sequence set and/or the configuration information of the transmission resource set; and the base station sends downlink control information, where the downlink control information includes activation information, and the activation information is used to indicate whether the preamble sequence set and/or the transmission resource set are activated.

The above first higher-layer configuration parameter includes L higher-layer configuration parameters, and the above first indication field includes R indication fields, where L and R are both greater than or equal to 1 and are integers.

Correspondingly, the terminal obtains the configuration information of the preamble sequence set and/or the configuration information of the transmission resource set by receiving the first higher-layer configuration parameter, and determines whether the preamble sequence set and/or the transmission resource set are activated by receiving the downlink control information.

Exemplarily, it is assumed that the first higher-layer configuration parameter is used to indicate the configuration information of the preamble sequence set and the configuration information of the transmission resource set, and the downlink control information is used to indicate whether the preamble sequence set and the transmission resource set are activated. The configuration information of the preamble sequence set and the configuration information of the transmission resource set are indicated by one or more higher-layer configuration parameters. The configuration information of the preamble sequence set and the configuration information of the transmission resource set are pre-configured information, and activation information in the downlink control information is used to indicate whether the pre-configured information is activated, i.e., whether the preamble sequence set and the transmission resource set are activated.

After the base station sends the configuration information of the preamble sequence set and the configuration information of the transmission resource set, the base station indicates, through the activation information in the downlink control information, whether the preamble sequence set and the transmission resource set are activated. Correspondingly, the terminal receives the configuration information of the preamble sequence set and the configuration information of the transmission resource set, and determines the corresponding preamble sequence set and transmission resource set. The terminal receives the downlink control information, and in a case where an activation information indication field in the downlink control information indicates that the preamble sequence set and the transmission resource set are activated, the terminal may use the preamble sequence set within the transmission resource set; in a case where the activation information indication field indicates that the preamble sequence set and the transmission resource set are deactivated, then before the preamble sequence set and the transmission resource set are activated again, the preamble sequence set and the transmission resource set are not applicable to the terminal.

Exemplarily, it is assumed that the first higher-layer configuration parameter is used to indicate the configuration information of the preamble sequence set, and the downlink control information is used to indicate whether the preamble sequence set is activated, the configuration information of the preamble sequence set may be indicated by one or more higher-layer configuration parameters. The configuration information of the preamble sequence set is pre-configured information, and the activation information in the downlink control information is used to indicate whether the pre-configured information is activated, i.e., whether the preamble sequence set is activated.

After the base station sends the configuration information of the preamble sequence set, the base station indicates, through the activation information in the downlink control information, whether the preamble sequence set is activated. Correspondingly, the terminal receives the configuration information of the preamble sequence set, and determines the corresponding preamble sequence set; the terminal receives the downlink control information, and in a case where the activation information indication field in the downlink control information indicates that the preamble sequence set is activated, the terminal may use the preamble sequence set; in a case where the activation information indication field indicates that the preamble sequence set is deactivated, then, before the preamble sequence set is activated again, the preamble sequence set is not applicable to the terminal.

As another implementation, the above S202 may be implemented as that: the base station sends a first higher-layer configuration parameter, where the first higher-layer configuration parameter is used to indicate configuration information of H preamble sequence sets and/or configuration information of J transmission resource sets; and the base station sends downlink control information, where a first indication field in the downlink control information is used to indicate at least one of: a preamble sequence set among the H preamble sequence sets, a transmission resource set among the J transmission resource sets; where H and J are both greater than or equal to 1 and are integers.

The above first higher-layer configuration parameter includes L higher-layer configuration parameters, and the above first indication field includes R indication fields, where L and R are both greater than or equal to 1 and are integers.

Correspondingly, the terminal determines the corresponding H preamble sequence sets and J transmission resource sets by receiving the first higher-layer configuration parameter, determines a preamble sequence set applicable to the terminal from the H preamble sequence sets by receiving the downlink control information, and/or determines the transmission resource set applicable to the terminal from the J transmission resource sets.

Exemplarily, it is assumed that the first higher-layer configuration parameter indicates configuration information of H preamble sequence sets and configuration information of a transmission resource set, and the downlink control information indicates a preamble sequence set among the H preamble sequence sets, where H is greater than 1 and is an integer. The terminal receives the configuration information of the H preamble sequence sets and the configuration information of the one transmission resource set, determines the H preamble sequence sets according to the configuration information of the H preamble sequence sets, and determines the one transmission resource set according to the configuration information of the one transmission resource set. The terminal receives the downlink control information, and determines a preamble sequence set among the H preamble sequence sets according to the first indication field in the downlink control information, and then the terminal may use the preamble sequence set within the transmission resource set.

Exemplarily, it is assumed that the first higher-layer configuration parameter indicates configuration information of a preamble sequence set and configuration information of J transmission resource sets, and the first indication field in the downlink control information indicates a transmission resource set among the J transmission resource sets, where J is greater than 1 and is an integer. The terminal receives the configuration information of the preamble sequence set and the configuration information of the J transmission resource sets, determines a preamble sequence set according to the configuration information of the preamble sequence set, and determines the J transmission resource sets according to the configuration information of the J transmission resource sets. The terminal receives the downlink control information, and determines a transmission resource set among the J transmission resource sets according to the first indication field in the downlink control information, so that the terminal may use the preamble sequence set within the transmission resource set.

Exemplarily, it is assumed that the first higher-layer configuration parameter indicates configuration information of H preamble sequence sets and configuration information of J transmission resource sets, and the downlink control information indicates a preamble sequence set among the H preamble sequence sets and a transmission resource set among the J transmission resource sets, where H and J are greater than 1 and are integers. The terminal receives the configuration information of the H preamble sequence sets and the configuration information of the J transmission resource sets, and determines the corresponding H preamble sequence sets and J transmission resource sets. The terminal receives the downlink control information, and determines a preamble sequence set among the H preamble sequence sets and determines a transmission resource set among the J transmission resource sets according to the first indication field in the downlink control information, so that the terminal may use the preamble sequence set within the transmission resource set.

As another implementation, the above S202 may be implemented as that: the base station sends downlink control information. A first indication field in the downlink control information is used to indicate the configuration information of the preamble sequence set and/or the configuration information of the transmission resource set.

The above first indication field includes R indication fields, where R is greater than or equal to 1 and is an integer.

Correspondingly, the terminal obtains the configuration information of the preamble sequence set and/or the configuration information of the transmission resource set by receiving the downlink control information.

In some embodiments, the above configuration information of the transmission resource set and the configuration information of the preamble sequence set may be applied to a terminal in at least one of the following mode: an idle mode, a connected mode, and an inactive mode. Exemplarily, the base station may instruct a terminal in one of the above three modes to apply the configuration information of the transmission resource set and the configuration information of the preamble sequence set.

In some embodiments, the above configuration information of the transmission resource set and the configuration information of the preamble sequence set may be applied to at least one of the following scenarios: an initial access scenario, a scenario of the second communication node handing over from an inactive mode to a connected mode, a radio resource control (RRC) connection re-establishment scenario, a cell handover scenario, a beam failure recovery scenario, a synchronous reconfiguration scenario, a timing alignment scenario during addition of a secondary cell (Scell), a downlink out-of-sync-downlink control channel ordering scenario, an uplink out-of-sync scenario, a scenario of exceeding a maximum number of scheduling request (SR) transmissions, a scenario where uplink data arrives and the SR is not configured with an uplink control channel, and a system information request scenario. Exemplarily, the base station instructs a terminal in at least one of the above scenarios to apply the configuration information of the transmission resource set and the configuration information of the preamble sequence set.

In some embodiments, the above first higher-layer configuration parameter is transmitted in a user equipment-specific (UE-specific) radio resource control (RRC) parameter; or the first higher-layer configuration parameter is transmitted in a paging message, a media access control (MAC) layer, or a system information block (SIB).

In some embodiments, the above downlink control information is transmitted in downlink control information scrambled by a paging-radio network temporary identifier (P-RNTI).

Another transmission resource configuration method is provided in the present disclosure, which is applied to the mobile communication network as shown in FIG. 1 (for ease of description, description is made below by taking the first node being a base station and the second node being a terminal as an example). As shown in FIG. 3, the method includes the following S301 to S303.

In S301, the terminal receives configuration information of a transmission resource set and configuration information of a preamble sequence set.

As an implementation, the terminal obtains the configuration information of the preamble sequence set by receiving a first higher-layer configuration parameter sent from the base station, and obtains the configuration information of the transmission resource set by receiving downlink control information.

As another implementation, the terminal obtains the configuration information of the preamble sequence set and/or the configuration information of the transmission resource set by receiving the first higher-layer configuration parameter, and determines whether the preamble sequence set and/or the transmission resource set are activated by receiving the downlink control information.

As another implementation, the terminal determines H preamble sequence sets and J transmission resource sets by receiving the first higher-layer configuration parameter, and determines a preamble sequence set applicable to the terminal from the H preamble sequence sets and/or determines a transmission resource set applicable to the terminal from the J transmission resource sets by receiving downlink control information, where H and J are both greater than or equal to 1 and are integers.

As another implementation, the terminal obtains the configuration information of the preamble sequence set and/or the configuration information of the transmission resource set by receiving the downlink control information.

It should be noted that the above first higher-layer configuration parameter includes L higher-layer configuration parameters, and the above first indication field includes R indication fields, where L and R are both greater than or equal to 1 and are integers.

In S302, the terminal determines the transmission resource set according to the configuration information of the transmission resource set, and determines the preamble sequence set according to the configuration information of the preamble sequence set.

As an implementation, the configuration information of the transmission resource set includes at least one of: an index s of a starting transmission resource, a transmission resource interval T, and a number of transmission resources, and then determining the transmission resource set may be implemented as: determining that the transmission resource set includes a transmission resource m•T+s according to at least one of the index s of the starting transmission resource, the transmission resource interval T, and the number of transmission resources, where values of m are 0, 1, 2, ..., M-1, M is the number of transmission resources, greater than or equal to 1 and is an integer, and s is an integer.

As another implementation, the configuration information of the transmission resource set includes a bitmap for indicating transmission resources, and then determining the transmission resource set may be implemented as: determining the transmission resource set according to a transmission resource corresponding to an indication bit with a value of 1 in the bitmap.

As another implementation, the configuration information of the transmission resource set includes at least one of: an index i of a transmission resource, a first numerical value A, a second numerical value B, and a number C of transmission resources, and then determining the transmission resource set may be implemented as: determining that the transmission resource set includes a transmission resource i or includes transmission resources i to i+C-1 according to the index i of the transmission resource, the first numerical value A, the second numerical value B, and the number C of transmission resources, where i satisfies mod (i, A)=B; A, B, and C are all greater than or equal to 1 and are integers, and i is an integer.

As another implementation, the configuration information of the transmission resource set includes at least one of: an index j of a starting transmission resource and a number N of transmission resources. The transmission resource set determined by the terminal according to the configuration information of the transmission resource set includes transmission resources j to j+N-1. A value of the above N is indicated by the configuration information of the transmission resource set, or the configuration information of the transmission resource set does not include the number N of transmission resources, N is a predefined value, greater than or equal to 1 and is an integer, and j is an integer.

As another implementation, the transmission resources include frequency domain resources, and configuration information of a frequency domain resource set includes at least one of: an index j of a starting frequency domain resource, a frequency domain resource interval K, and a number N of frequency domain resources, where N and K are greater than or equal to 1 and are integers, and j is an integer. The index j of the starting frequency domain resource corresponds to a starting frequency domain position index of a first frequency domain resource in the frequency domain resource set, where the starting frequency domain position index may be a starting subcarrier index, a starting physical resource block index, or a starting subband index, etc. It is assumed that a starting frequency domain position in the configuration information of the frequency domain resource set is a physical resource block j, starting positions of all frequency domain resources included in the frequency domain resource set determined according to the configuration information of the frequency domain resource set are respectively j, K+j, 2K+j, 3K+j, ..., (N-1)•K+j. A value of the above N is indicated by the configuration information of the frequency domain resource set, or the configuration information of the frequency domain resource set does not include the number N of frequency domain resources, the N value is a predefined value.

As another implementation, the transmission resources include SSB resources, configuration information of a SSB resource set includes at least one of: an index i of a starting SSB and a number Q of SSBs. The index i of the starting SSB is an index of a first SSB in the SSB resource set; the number Q of SSBs is a number of SSBs included in the SSB resource set. The SSB resource set determined according to the configuration information of the SSB resource set includes SSBs i to i+Q-1. A value of Q is indicated by the configuration information of the SSB resource set, or the configuration information of the SSB resource set does not include the number Q of SSBs, Q is a predefined value, greater than or equal to 1 and is an integer, and i is an integer.

As another implementation, the transmission resources include beam resources, configuration information of a beam resource set includes at least one of: an index i of a starting beam and a number Q of beams. The starting beam corresponds to a first beam in the beam resource set; the number of beams corresponds to a number of beams included in the beam resource set. The beam resource set determined according to the configuration information of the beam resource set includes beam resources i to i+Q-1. A value of Q is indicated by the configuration information of the beam resource set, or the configuration information of the beam resource set does not include the number Q of beams, Q is a predefined value, greater than or equal to 1 and is an integer, and i is an integer.

As another implementation, the configuration information of the transmission resource set includes a configuration information index. The configuration information index corresponds to at least one of an index of a starting transmission resource, a transmission resource interval, a number of transmission resources, or an index of a transmission resource. The corresponding transmission resource set is determined according to the configuration information index.

As another implementation, the configuration information of the transmission resource set includes: at least one index of at least one transmission resource. Determining the transmission resource set according to the indexes of transmission resources included in the configuration information of the transmission resource set includes: determining at least one transmission resource corresponding to the at least one index of the at least one transmission resource.

As an implementation, the configuration information of the preamble sequence set including an index of the preamble sequence set, and then determining the preamble sequence set may be implemented as: determining the preamble sequence set corresponding to the index of the preamble sequence set as the preamble sequence set.

As another implementation, the configuration information of the preamble sequence set includes at least one of: a starting preamble sequence h, a preamble sequence interval H, and a number of preamble sequences, and then determining the preamble sequence set may be implemented as: determining that the preamble sequence set includes a preamble sequence p•H+h according to the index h of the starting preamble sequence, the preamble sequence interval H, and the number of preamble sequences, where values of p are 0, 1, 2, ..., P-1, P is the number of preamble sequences, greater than or equal to 1 and is an integer, and h is an integer.

As another implementation, the configuration information of the preamble sequence set includes at least one of: an index h of a preamble sequence, a third numerical value D, a fourth numerical value E, and a number F of preamble sequences, and then determining the preamble sequence set may be implemented as: determining that the preamble sequence set includes a preamble sequence h or includes preamble sequences h to h+F-1 according to the index h of the preamble sequence, the third numerical value D, the fourth numerical value E, and the number F of preamble sequences, where h satisfies mod (h, D)=E; D, E, and F are all greater than or equal to 1 and are integers, and h is an integer.

In S303, the terminal sends a preamble sequence in the preamble sequence set within the transmission resource set.

Exemplarily, a transmission resource includes a time domain resource. After the terminal receives the configuration information of a time domain resource set, the terminal may send a preamble sequence in the preamble sequence set on a time domain resource of the time domain resource set.

Exemplarily, the transmission resource includes a frequency domain resource. After the terminal receives the configuration information of a frequency domain resource set, the terminal may send a preamble sequence in the preamble sequence set on a frequency domain resource of the frequency domain resource set.

Exemplarily, the transmission resource includes an SSB resource. The terminal determines an SSB, and then after the terminal receives the configuration information of an SSB resource set, in a case where an SSB determined by the terminal belongs to the SSB resource set corresponding to the configuration information of the SSB resource set, the terminal may send a preamble sequence in the preamble sequence set.

Exemplarily, the transmission resource includes a beam resource. After the terminal receives the configuration information of a beam resource set, the terminal may use the preamble sequence set under a condition of using a beam in the beam resource set. For example, in a case where the terminal sends a preamble sequence using a beam in the beam resource set, the preamble sequence sent from the terminal is a preamble sequence in the preamble sequence set.

It may be understood that, in a case where the transmission resources include a plurality of transmission resources of different types, the terminal needs to individually satisfy the plurality of transmission resources of different types before sending a preamble sequence in the preamble sequence set. Exemplarily, in a case where the transmission resource includes a time domain transmission resource and a frequency domain transmission resource, after the terminal receives configuration information of a time domain resource set and configuration information of a frequency domain resource set, the terminal determines whether a time domain resource and a frequency domain resource for sending the preamble sequence respectively belong to the time domain resource set and the frequency domain resource set. In a case where the time domain resource and the frequency domain resource for sending the preamble sequence belong to the time domain resource set and the frequency domain resource set respectively, the terminal sends a preamble sequence in the preamble sequence set.

It should be noted that the transmission resource configuration method provided in the embodiments of the present disclosure, and the configuration information of the transmission resources and the configuration information of the preamble sequence set involved in the transmission resource configuration method may be applied to at least one of the following scenarios: an initial access scenario, a scenario of the terminal handing over from an inactive mode to a connected mode, an RRC connection re-establishment scenario, a cell handover scenario, a beam failure recovery scenario, a synchronous reconfiguration scenario, a timing alignment scenario during addition of a secondary cell (Scell), a downlink out-of-sync-downlink control channel ordering scenario, an uplink out-of-sync scenario, a scenario of exceeding a maximum number of scheduling request (SR) transmissions, a scenario where uplink data arrives and the SR is not configured with an uplink control channel, and a system information request scenario. Exemplarily, the base station may instruct a terminal in one of the above scenarios to apply the configuration information of the transmission resource set and the configuration information of the preamble sequence set.

In summary, based on the transmission resource configuration method provided in the embodiments of the present disclosure, the first node may configure a preamble sequence set for a transmission resource set, where the preamble sequence set is used within the transmission resource set; and then the first node sends configuration information of the transmission resource set and configuration information of the preamble sequence set to the second node. It can be seen that in the method provided in the embodiments of the present disclosure, preamble sequences may be dynamically allocated for different transmission resources, so that the preamble sequence set may be flexibly adjusted, avoiding waste of preamble sequence resources and avoiding access contention between terminals, thus to improve random access efficiency of the system.

The solutions provided in the embodiments of the present disclosure are introduced above from the perspective of methods. It can be understood that, in order to implement the above functions, the configuration apparatus includes at least one of corresponding hardware structures or software modules for implementing various functions. Those skilled in the art should easily realize that the embodiments of the present disclosure are able to be implemented in the form of hardware or a combination of hardware and computer software in combination with units and steps of algorithms described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the embodiments of the present disclosure.

The configuration apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

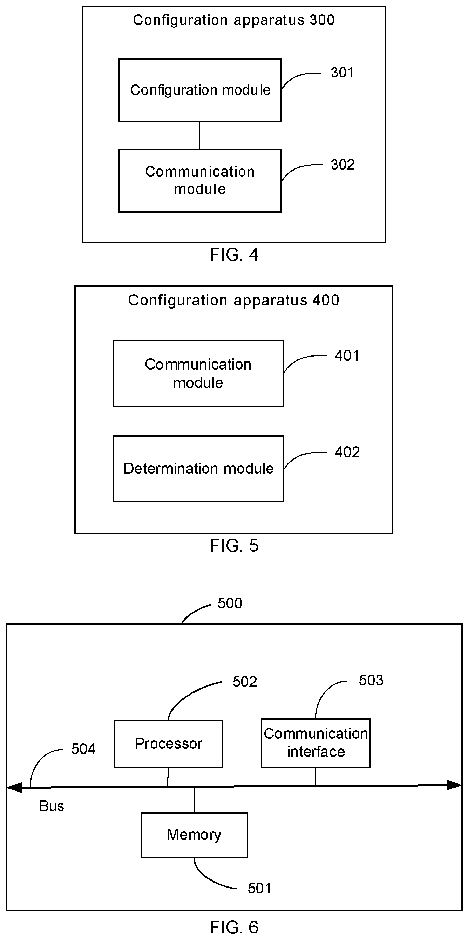

FIG. 4 is a structural schematic diagram of a configuration apparatus according to the embodiments of the present disclosure, the configuration apparatus is applied to a first node and may perform the transmission resource configuration method provided in the above method embodiments. As shown in FIG. 4, the configuration apparatus 300 includes: a configuration module 301 and a communication module 302.

The configuration module 301 is configured to configure a preamble sequence set for a transmission resource set. The preamble sequence set is used within the transmission resource set.

The communication module 302 is configured to send configuration information of the transmission resource set and configuration information of the preamble sequence set to a second node.

In some embodiments, the configuration information of the transmission resource set includes at least one of: an index of a starting transmission resource, an offset value of the starting transmission resource, a transmission resource interval, and a number of transmission resources.

In some embodiments, the transmission resource set includes a transmission resource m•T+s, where values of m are 0, 1, 2, ..., M-1; where s is the index of the starting transmission resource, T is the transmission resource interval, M is the number of transmission resources included in the transmission resource set, M is greater than or equal to 1 and is an integer, and s is an integer.

In some embodiments, the configuration information of the transmission resource set includes a configuration information index. The configuration information index corresponds to at least one of an index of a starting transmission resource, a transmission resource interval, a number of transmission resources, or an index of a transmission resource.

In some embodiments, the configuration information of the transmission resource set includes: at least one index of at least one transmission resource. At least one transmission resource corresponding to the at least one index of the at least one transmission resource constitute the transmission resource set.

In some embodiments, the configuration information of the transmission resource set includes at least one of: an index of a transmission resource, a first numerical value, a second numerical value, and a number of transmission resources.

In some embodiments, the transmission resource set includes: a transmission resource i; or the transmission resource set comprises: transmission resources i to i+C-1; where i satisfies mod (i, A)=B; where i is the index of the transmission resource, A is the first numerical value, B is the second numerical value, C is the number of transmission resources, A and B are both greater than or equal to 1 and are integers, C is greater than or equal to 1 and is an integer, and i is an integer.

In some embodiments, the configuration information of the transmission resource set includes a bitmap for indicating transmission resources. A value of each indication bit in the bitmap is used to indicate whether a transmission resource corresponding to the indication bit is a transmission resource included in the transmission resource set.

In some embodiments, the configuration information of the preamble sequence set includes an index of the preamble sequence set, and the index of the preamble sequence set corresponds to the preamble sequence set.

In some embodiments, the configuration information of the preamble sequence set includes at least one of: an index of a starting preamble sequence, a preamble sequence interval, and a number of preamble sequences.

In some embodiments, the preamble sequence set includes a preamble sequence p•H+h, where values of p are 0, 1, 2, ..., P-1; where h is the index of the starting preamble sequence, H is the preamble sequence interval, P is the number of preamble sequences comprised in the preamble sequence set, greater than or equal to 1 and is an integer, and h is an integer.

In some embodiments, the configuration information of the preamble sequence set includes at least one of: an index of a preamble sequence, a third numerical value, a fourth numerical value, and a number of preamble sequences.

In some embodiments, the preamble sequence set includes a preamble sequence h; or the preamble sequence set includes preamble sequences h to h+F-1; where h satisfies mod (h, D)=E; where h is the index of the preamble sequence, D is the third numerical value, E is the fourth numerical value, F is the number of preamble sequences, D and E are both greater than or equal to 1 and are integers, F is greater than or equal to 1 and is an integer, and h is an integer.

In some embodiments, the communication module 302 is, for example, configured to: send a first higher-layer configuration parameter, where the first higher-layer configuration parameter is used to indicate the configuration information of the transmission resource set; and send downlink control information, where a first indication field in the downlink control information is used to indicate the configuration information of the preamble sequence set.

In some embodiments, the communication module 302 is, for example, configured to: send a first higher-layer configuration parameter, where the first higher-layer configuration parameter is used to indicate the configuration information of the preamble sequence set; and send downlink control information, where a first indication field in the downlink control information is used to indicate the configuration information of the transmission resource set.

In some embodiments, the communication module 302 is, for example, configured to: send a first higher-layer configuration parameter, where the first higher-layer configuration parameter is used to indicate the configuration information of the preamble sequence set and/or the configuration information of the transmission resource set; and send downlink control information, where the downlink control information includes activation information, and the activation information is used to indicate whether the preamble sequence set and/or the transmission resource set are activated.

In some embodiments, the communication module 302 is, for example, configured to: send a first higher-layer configuration parameter, where the first higher-layer configuration parameter is used to indicate configuration information of H preamble sequence sets and configuration information of J transmission resource sets; and send downlink control information, where a first indication field in the downlink control information is used to indicate at least one of: a preamble sequence set among the H preamble sequence sets, a transmission resource set among the J transmission resource sets; where H and J are both greater than or equal to 1 and are integers.

In some embodiments, the communication module 302 is, for example, configured to send downlink control information; where a first indication field in the downlink control information is used to indicate the configuration information of the preamble sequence set and/or the configuration information of the transmission resource set.

In some embodiments, the first higher-layer configuration parameter includes L higher-layer configuration parameters, and the first indication field includes R indication fields, where L and R are both greater than or equal to 1 and are integers.

FIG. 5 is a structural schematic diagram of another configuration apparatus according to the embodiments of the present disclosure, the configuration apparatus is applied to a second node and may perform the transmission resource configuration method provided in the above method embodiments. As shown in FIG. 5, the configuration apparatus 400 includes: a communication module 401 and a determination module 402.

The communication module 401 is configured to receive configuration information of a transmission resource set and configuration information of a preamble sequence set sent from a first node.

The determination module 402 is configured to: determine the transmission resource set according to the configuration information of the transmission resource set; and determine the preamble sequence set according to the configuration information of the preamble sequence set.

The communication module 401 is further configured to send a preamble sequence in the preamble sequence set within the transmission resource set.

In some embodiments, the configuration information of the transmission resource set includes at least one of: an index s of a starting transmission resource, a transmission resource interval T, and a number of transmission resources. The determination module 402 is, for example, configured to determine that the transmission resource set includes a transmission resource m•T+s, where values of m are 0, 1, 2, ..., M-1, where M is the number of transmission resources, greater than or equal to 1 and is an integer, and s is an integer.

In some embodiments, the configuration information of the transmission resource set includes a bitmap for indicating transmission resources. The determination module 402 is, for example, configured to determine the transmission resource set according to a transmission resource corresponding to an indication bit with a value of 1 in the bitmap.

In some embodiments, the configuration information of the transmission resource set includes at least one of: an index i of a transmission resource, a first numerical value A, a second numerical value B, and a number C of transmission resources, and the determination module 402 is, for example, configured to determine that the transmission resource set includes a transmission resource i or includes transmission resources i to i+C-1, wherein i satisfies mod (i, A)=B; A, B, and C are all greater than or equal to 1 and are integers, and i is an integer.

In some embodiments, the configuration information of the preamble sequence set includes an index of the preamble sequence set. The determination module 402 is, for example, configured to determine a preamble sequence set corresponding to the index of the preamble sequence set as the preamble sequence set.

In some embodiments, the configuration information of the preamble sequence set includes at least one of: an index h of a starting preamble sequence, a preamble sequence interval H, or a number of preamble sequences. The determination module 402 is, for example, configured to determine that the preamble sequence set includes a preamble sequence p•H+h, where values of p are 0, 1, 2, ..., P-1, P is the number of preamble sequences, greater than or equal to 1 and is an integer, and h is an integer.

In some embodiments, the configuration information of the preamble sequence set includes at least one of: an index h of a preamble sequence, a third numerical value D, a fourth numerical value E, or a number F of preamble sequences; the determination module 402 is, for example, configured to determine that the preamble sequence set comprises a preamble sequence h or comprises preamble sequences h to h+F-1, wherein h satisfies mod (h, D)=E; D, E, and F are all greater than or equal to 1 and are integers, and h is an integer.

In some embodiments, the communication module 401 is, for example, configured to receive a first higher-layer configuration parameter. The first higher-layer configuration parameter indicates the configuration information of the preamble sequence set and/or the configuration information of the transmission resource set.

In some embodiments, the communication module 401 is further configured to receive downlink control information. The downlink control information includes activation information, and the activation information is used to indicate whether the preamble sequence set and/or the transmission resource set are activated. The communication module 401 is, for example, configured to, in response to the activation information indicating that the preamble sequence set and/or the transmission resource set are activated, send the preamble sequence in the preamble sequence set within the transmission resource set.

In some embodiments, the communication module 401 is, for example, configured to: receive a first higher-layer configuration parameter, where the first higher-layer configuration parameter is used to indicate configuration information of H preamble sequence sets and/or configuration information of J transmission resource sets; determine the H preamble sequence sets and/or the J transmission resource sets according to the first higher-layer configuration parameter; receive downlink control information, where a first indication field in the downlink control information is used to indicate at least one of: a preamble sequence set among the H preamble sequence sets, a transmission resource set among the J transmission resource sets; where H and J are both greater than or equal to 1 and are integers; and determine the preamble sequence set from the H preamble sequence sets and/or determine the transmission resource set from the J transmission resource sets according to the downlink control information.

In a case where the functions of the above-mentioned integrated modules are implemented in the form of hardware, a possible structure of a communication apparatus involved in the above-mentioned embodiments is provided in the embodiments of the present disclosure. As shown in FIG. 6, the communication apparatus 500 includes: a processor 502 and a bus 504. In some other embodiments, the communication apparatus 500 further includes a memory 501. In some embodiments, the communication apparatus 500 may further include a communication interface 503.

The processor 502 may implement or perform various exemplary logical blocks, modules and circuits described in combination with the embodiments of the present disclosure. The processor 502 may be a central processing unit, a general-purpose processor, a digital signal processor, an application-specific integrated circuit, a field programmable gate array or other programmable logic assemblies, a transistor logic assembly, a hardware component or any combination thereof, which may implements or executes the various exemplary logical blocks, modules and circuits described in combination with the embodiments of the present disclosure. The processor 502 may also be a combination for realizing computing functions, for example, a combination including one or more microprocessors, a combination of a DSP (digital signal processor) and a microprocessor, or the like.

The communication interface 503 is configured to connect to other devices through a communication network. The communication network may be the Ethernet, a radio access network, a wireless local area network (WLAN), or the like.

The memory 501 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with instructions or data and can be accessed by a computer, which is not limited thereto.

As an implementation, the memory 501 may exist independently from the processor 502, and the memory 501 may be connected to the processor 502 through the bus 504, and is configured to store instructions or program codes. In a case where the processor 502 invokes and executes instructions or program codes stored in the memory 501, the transmission resource configuration method provided in the embodiments of the present disclosure may be implemented. In another implementation, the memory 501 may be integrated with the processor 502.

The bus 504 may be an extended industry standard architecture (EISA) bus, or the like. The bus 504 may be classified as an address bus, a data bus, or a control bus, or the like. For ease of representation, only one bold line is used in FIG. 6 for representing the bus, but it does not mean that there is only one bus or one type of bus.

A computer-readable storage medium (for example, a non-transitory computer-readable storage medium) is provided in some embodiments of the present disclosure. The computer-readable storage medium has computer program instructions stored therein, and in a case where the computer program instructions are run on a computer, the computer is caused to perform the transmission resource configuration method according to any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, in a case where the computer program product is run on a computer, the computer is enabled to perform the transmission resource configuration method as described in any one of the above-mentioned embodiments.

In the transmission resource configuration scheme provided in the embodiments of the present disclosure, preamble sequences may be dynamically allocated for different transmission resources, so that the preamble sequence set may be flexibly adjusted, avoiding waste of preamble sequence resources and avoiding access contention between terminals, thus to improve random access efficiency of the system.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

## Claims

1. A transmission resource configuration method, **characterized by** being applied to a first node, comprising:
configuring a preamble sequence set for a transmission resource set, wherein the preamble sequence set is used within the transmission resource set; and
sending configuration information of the transmission resource set and configuration information of the preamble sequence set to a second node.

2. The method according to claim 1, wherein the configuration information of the transmission resource set comprises at least one of: an index of a starting transmission resource, an offset value of the starting transmission resource, a transmission resource interval, and a number of transmission resources.

3. The method according to claim 2, wherein the transmission resource set comprises a transmission resource m•T+s, wherein values of m are 0, 1, 2, ..., M-1; wherein s is the index of the starting transmission resource, T is the transmission resource interval, M is the number of transmission resources comprised in the transmission resource set, M is greater than or equal to 1 and is an integer, and s is an integer.

4. The method according to claim 1, wherein the configuration information of the transmission resource set comprises a configuration information index; the configuration information index corresponds to at least one of an index of a starting transmission resource, a transmission resource interval, a number of transmission resources, or a transmission resource index.

5. The method according to claim 1, wherein the configuration information of the transmission resource set comprises: at least one transmission resource index, wherein at least one transmission resource corresponding to the at least one transmission resource index constitute the transmission resource set.

6. The method according to claim 1, wherein the configuration information of the transmission resource set comprises at least one of: a transmission resource index, a first numerical value, a second numerical value, and a number of transmission resources.

7. The method according to claim 6, wherein the transmission resource set comprises: a transmission resource i; or the transmission resource set comprises: transmission resources i to i+C-1; wherein i satisfies mod (i, A)=B; wherein i is a transmission resource index, A is the first numerical value, B is the second numerical value, C is the number of transmission resources, A and B are both greater than or equal to 1 and are integers, C is greater than or equal to 1 and is an integer, and i is an integer.

8. The method according to claim 1, wherein the configuration information of the transmission resource set comprises a bitmap for indicating transmission resources; a value of each indication bit in the bitmap is used to indicate whether a transmission resource corresponding to the indication bit is a transmission resource comprised in the transmission resource set.

9. The method according to claim 1, wherein the configuration information of the preamble sequence set comprises an index of the preamble sequence set, and the index of the preamble sequence set corresponds to the preamble sequence set.

10. The method according to claim 1, wherein the configuration information of the preamble sequence set comprises at least one of: an index of a starting preamble sequence, a preamble sequence interval, and a number of preamble sequences.

11. The method according to claim 10, wherein the preamble sequence set comprises a preamble sequence p•H+h, wherein values of p are 0, 1, 2, ..., P-1; wherein h is the index of the starting preamble sequence, H is the preamble sequence interval, P is the number of preamble sequences comprised in the preamble sequence set, greater than or equal to 1 and is an integer, and h is an integer.

12. The method according to claim 1, wherein the configuration information of the preamble sequence set comprises at least one of: an index of a preamble sequence, a third numerical value, a fourth numerical value, and a number of preamble sequences.

13. The method according to claim 12, wherein the preamble sequence set comprises a preamble sequence h; or the preamble sequence set comprises preamble sequences h to h+F-1; wherein h satisfies mod (h, D)=E; wherein h is the index of the preamble sequence, D is the third numerical value, E is the fourth numerical value, F is the number of preamble sequences, D and E are both greater than or equal to 1 and are integers, F is greater than or equal to 1 and is an integer, and h is an integer.

14. The method according to claim 1, wherein sending the configuration information of the transmission resource set and the configuration information of the preamble sequence set comprises:
sending a first higher-layer configuration parameter, wherein the first higher-layer configuration parameter is used to indicate the configuration information of the transmission resource set; and
sending downlink control information, wherein a first indication field in the downlink control information is used to indicate the configuration information of the preamble sequence set.

15. The method according to claim 1, wherein sending the configuration information of the transmission resource set and the configuration information of the preamble sequence set comprises:
sending a first higher-layer configuration parameter, wherein the first higher-layer configuration parameter is used to indicate the configuration information of the preamble sequence set; and
sending downlink control information, wherein a first indication field in the downlink control information is used to indicate the configuration information of the transmission resource set.

16. The method according to claim 1, wherein sending the configuration information of the transmission resource set and the configuration information of the preamble sequence set comprises:
sending a first higher-layer configuration parameter, wherein the first higher-layer configuration parameter is used to indicate the configuration information of the preamble sequence set and/or the configuration information of the transmission resource set; and
sending downlink control information, wherein the downlink control information comprises activation information, and the activation information is used to indicate whether to activate the preamble sequence set and/or the transmission resource set.

17. The method according to claim 1, wherein sending the configuration information of the transmission resource set and the configuration information of the preamble sequence set comprises:
sending a first higher-layer configuration parameter, wherein the first higher-layer configuration parameter is used to indicate configuration information of H preamble sequence sets and/or configuration information of J transmission resource sets; and
sending downlink control information, wherein a first indication field in the downlink control information is used to indicate at least one of: a preamble sequence set among the H preamble sequence sets, a transmission resource set among the J transmission resource sets; wherein H and J are both greater than or equal to 1 and are integers.

18. The method according to claim 1, wherein sending the configuration information of the transmission resource set and the configuration information of the preamble sequence set comprises:
sending downlink control information, wherein a first indication field in the downlink control information is used to indicate the configuration information of the preamble sequence set and/or the configuration information of the transmission resource set.

19. The method according to any one of claims 14 to 18, wherein the first higher-layer configuration parameter comprises L higher-layer configuration parameters, and the first indication field comprises R indication fields, wherein L and R are both greater than or equal to 1 and are integers.

20. A transmission resource configuration method, **characterized by** being applied to a second node, comprising:
receiving configuration information of a transmission resource set and configuration information of a preamble sequence set sent from a first node;
determining the transmission resource set according to the configuration information of the transmission resource set;
determining the preamble sequence set according to the configuration information of the preamble sequence set; and
sending a preamble sequence in the preamble sequence set within the transmission resource set.

21. The method according to claim 20, wherein the configuration information of the transmission resource set comprises at least one of: an index s of a starting transmission resource, a transmission resource interval T, and a number of transmission resources; and
determining the transmission resource set according to the configuration information of the transmission resource set comprises:
determining that the transmission resource set comprises a transmission resource m•T+s, wherein values of m are 0, 1, 2, ..., M-1, wherein M is the number of transmission resources, greater than or equal to 1 and is an integer, and s is an integer.

22. The method according to claim 20, wherein the configuration information of the transmission resource set comprises a bitmap for indicating transmission resources; and
determining the transmission resource set according to the configuration information of the transmission resource set comprises:
determining the transmission resource set according to a transmission resource corresponding to an indication bit with a value of 1 in the bitmap.

23. The method according to claim 20, wherein the transmission resource set comprises at least one of: a transmission resource index i, a first numerical value A, a second numerical value B, and a number C of transmission resources; and
determining the transmission resource set according to the configuration information of the transmission resource set comprises:
determining that the transmission resource set comprises a transmission resource i or comprises transmission resources i to i+C-1, wherein i satisfies mod (i, A)=B; A, B, and C are all greater than or equal to 1 and are integers, and i is an integer.

24. The method according to claim 20, wherein the configuration information of the preamble sequence set comprises an index of the preamble sequence set; and
determining the preamble sequence set according to the configuration information of the preamble sequence set comprises:
determining a preamble sequence set corresponding to the index of the preamble sequence set as the preamble sequence set.

25. The method according to claim 20, wherein the configuration information of the preamble sequence set comprises at least one of: an index h of a starting preamble sequence, a preamble sequence interval H, or a number of preamble sequences; and
determining the preamble sequence set according to the configuration information of the preamble sequence set comprises:
determining that the preamble sequence set comprises a preamble sequence p•H+h, wherein values of p are 0, 1, 2, ..., P-1, P is the number of preamble sequences, greater than or equal to 1 and is an integer, and h is an integer.

26. The method according to claim 20, wherein the configuration information of the preamble sequence set comprises at least one of: an index h of a preamble sequence, a third numerical value D, a fourth numerical value E, or a number F of preamble sequences; and
determining the preamble sequence set according to the configuration information of the preamble sequence set comprises:
determining that the preamble sequence set comprises a preamble sequence h or comprises preamble sequences h to h+F-1, wherein h satisfies mod (h, D)=E; D, E, and F are all greater than or equal to 1 and are integers, and h is an integer.

27. The method according to claim 20, wherein receiving the configuration information of the transmission resource set and the configuration information of the preamble sequence set sent from the first node comprises:
receiving a first higher-layer configuration parameter, wherein the first higher-layer configuration parameter indicates the configuration information of the preamble sequence set and/or the configuration information of the transmission resource set.

28. The method according to claim 27, further comprising:
receiving downlink control information, wherein the downlink control information comprises activation information, and the activation information is used to indicate whether the preamble sequence set and/or the transmission resource set are activated; and
sending the preamble sequence in the preamble sequence set within the transmission resource set comprises:
in response to the activation information indicating that the preamble sequence set and/or the transmission resource set are activated, sending the preamble sequence in the preamble sequence set within the transmission resource set.

29. The method according to claim 20, wherein receiving the configuration information of the transmission resource set and the configuration information of the preamble sequence set sent from the first node comprises:
receiving a first higher-layer configuration parameter, wherein the first higher-layer configuration parameter is used to indicate configuration information of H preamble sequence sets and/or configuration information of J transmission resource sets; and
determining the H preamble sequence sets and/or the J transmission resource sets according to the first higher-layer configuration parameter;
receiving downlink control information, wherein a first indication field in the downlink control information is used to indicate at least one of: a preamble sequence set among the H preamble sequence sets, a transmission resource set among the J transmission resource sets; wherein H and J are both greater than or equal to 1 and are integers.
determining the preamble sequence set from the H preamble sequence sets and/or determining the transmission resource set from the J transmission resource sets according to the downlink control information.

30. A communication apparatus, comprising: a memory and a processor, wherein the memory is coupled to the processor, the memory is configured to store instructions executable for the processor, and the processor is configured, upon the instructions being executed, to perform the transmission resource configuration method according to any one of claims 1 to 29.

31. A computer-readable storage medium, wherein computer instructions are stored on the computer-readable storage medium, and the computer instructions, upon being executed on an electronic device, enable the electronic device to perform the transmission resource configuration method according to any one claims 1 to 29.
